(19) Europäisches Patentamt
European Patent Office
Office européen des brevets

(11) EP 0 654 495 B1

(12) # FASCICULE DE BREVET EUROPEEN

(45) Date de publication et mention de la délivrance du brevet:
**27.01.1999 Bulletin 1999/04**

(51) Int Cl.[6]: **C08G 77/60**, G03G 5/07

(21) Numéro de dépôt: **94402672.3**

(22) Date de dépôt: **23.11.1994**

(54) **Film photoconducteur formé d'un polymère de silane greffé, procédé de préparation, procédé de formation d'une image électrostatique mettant en oeuvre un tel film et valve optique comportant un tel film**

Photoleitender Film auf Basis eines aufgepfropften Polymer von Silanen, Verfahren zur Herstellung dieses Polymers; Verfahren zur Formation eines elektrostatischen Bildes mittels dieses Film und eine optische Ventilvorrichtung die diesen Film enthalt

Photoconductive film formed from a grafted silane polymer; process for preparing and process for the formation of an electrostatic image of this film and an optical valve based on this film

(84) Etats contractants désignés:
**DE GB**

(30) Priorité: **24.11.1993 FR 9314049**

(43) Date de publication de la demande:
**24.05.1995 Bulletin 1995/21**

(73) Titulaires:
- **FRANCE TELECOM**
  **75015 Paris (FR)**
- **CENTRE NATIONAL DE LA RECHERCHE SCIENTIFIQUE (CNRS)**
  **75794 Paris Cédex 16 (FR)**

(72) Inventeurs:
- **Moisan, Jean-Yves**
  **F-22300 Lannion (FR)**
- **Sepulchre, Maurice**
  **F-91940 Les Ulis (FR)**
- **Lemmer, Marc**
  **F-75019 Paris (FR)**
- **Spassky, Nicolas**
  **F-92310 Sevres (FR)**

(74) Mandataire: **Ahner, Francis et al**
**CABINET REGIMBEAU**
**26, avenue Kléber**
**75116 Paris (FR)**

(56) Documents cités:
**EP-A- 0 189 991** **EP-A- 0 224 784**
**FR-A- 2 228 808**

- **DATABASE WPI Derwent Publications Ltd., London, GB; AN 93-071790 & JP-A-5 019 497 (KONICA CORP.) 29 Janvier 1993 & US-A-5 278 014 (KIYOSHI TAMAKI) 11 Janvier 1994**
- **DATABASE WPI Derwent Publications Ltd., London, GB; AN 93-048789 & JP-A-4 372 953 (KONICA CORP.) 25 Décembre 1992 & US-A-5 278 014 (KIYOSHI TAMAKI) 11 Janvier 1994**
- **DATABASE WPI Derwent Publications Ltd., London, GB; AN 88-351366 & JP-A-63 264 759 (MITSUI POATSU CHEM. INC.) 1 Novembre 1988**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 654 495 B1

## Description

La présente invention a pour objet un polymère statistique de silane greffé photoconducteur à mobilité de porteurs élevée, un procédé de préparation dudit polymère et un film photoconducteur formé d'un tel polymère. Elle a encore pour objet un procédé de formation d'une image électrostatique mettant en oeuvre un tel film.

L'invention concerne également une valve optique formée d'une couche de cristal liquide et d'une couche dudit film ou un matériau pour caméra holographique formée d'une couche d'un film thermoplastique et d'une couche d'un film selon l'invention.

Elle a enfin pour objet un procédé de reproduction xérographique d'images mettant en oeuvre un tel film.

Les photoconducteurs organiques sont aujourd'hui largement utilisés dans le domaine de la xérographie : de nombreux photocopieurs exploitent les propriétés particulières de ces matériaux. En outre, de nouvelles applications apparaissent, en particulier pour la réalisation de fonctions optiques susceptibles d'intéresser les télécommunications optiques.

Les applications précitées font appel à la réalisation d'une image électrostatique produite dans le photoconducteur lui-même. Ce dernier, sous forme d'un film de quelques micromètres d'épaisseur, est soumis à un champ électrique homogène, par exemple par dépôt de charges électriques par effet corona. Lorsque le matériau est soumis à un éclairement inhomogène, par un rayonnement dont la longueur d'onde est appropriée (ou dont les photons ont le niveau d'énergie approprié), des charges électriques sont générées dans la couche, ces charges se séparent et migrent sous l'effet du champ électrique créé par les charges préalablement déposées. Là où la couche a été éclairée, les charges de surface seront annulées par des charges de signe opposé et restera ainsi une répartition de charges en surface à l'image de l'éclairement préalable : l'image électrostatique créée est la reproduction de l'image projetée.

On appelle ainsi rendement de photogénération, le nombre de charges photogénérées par le nombre de photons absorbés (ce rendement dépendant de la longueur d'onde d'excitation). La mobilité exprime la vitesse de déplacement des charges, paramètre dépendant de la nature du matériau et indépendant de la longueur d'onde d'excitation.

Il existe plusieurs façons d'exploiter cette image électrostatique. Si le film est mis en contact du "toner" (poudre de particules organiques chargées de noir de carbone), ce dernier se "fixe" par simple attraction électrostatique sur les zones chargées de la surface du film. Sur une feuille de papier mise alors en contact vont se déposer des particules de toner, avec une répartition identique à l'image projetée sur le photoconducteur. La fixation de l'image est faite par chauffage de la feuille de papier et fusion du toner. Il s'agit dans ce cas de xérographie : si l'image projetée est celle d'un original, c'est la photocopie ; si l'image est créée point à point par un laser, c'est l'impression-laser.

Un autre procédé permettant d'exploiter l'image électrostatique est celle des caméras holographiques. Un film thermoplastique est déposé sur le film photoconducteur et l'ensemble de ces deux couches est chargé à nouveau par effet corona. Le champ électrostatique à considérer ici est celui qui concerne le film thermoplastique. Une modulation du champ électrique est créée autour du film thermoplastique par l'éclairement sélectif du photoconducteur : lors du ramollissement, par chauffage, du film thermoplastique, la déformation de ce dernier révèle l'image projetée précédemment. Un système d'interférences créé par un faisceau-source et un faisceau-image, issus d'un même laser, génère un réseau de diffraction. Ce réseau, lu par le même laser, reproduit l'image de l'objet (Principe de l'holographie).

Le même principe peut être utilisé pour une commutation spatiale de faisceaux issus de fibres optiques.

Un dernier procédé permettant d'exploiter l'image électrostatique est celui de la valve optique. Dans ce cas, le photoconducteur est associé à un cristal liquide et l'ensemble des deux couches est inséré entre deux électrodes sur supports transparents. Le champ appliqué par les électrodes est trop faible pour "commander" le cristal liquide. Mais lorsque le photoconducteur est éclairé, la tension portée par l'électrode adjacente est reportée aux bornes du cristal liquide : le champ appliqué à ce dernier est alors suffisant pour le faire changer d'état. On peut donc ainsi rendre sélectivement transparent (ou obscur) un cristal liquide en éclairant (ou non) le photoconducteur qui lui est associé à une longueur d'onde à laquelle il est sensible.

Dans toutes ces applications, le film photoconducteur ne révèle pas, par lui-même, l'image projetée. Par contre il permet l'enregistrement de l'image électrostatique, révélée par un autre matériau : le photoconducteur est un organe de commande.

L'intérêt du film photoconducteur organique tient dans le fait de sa très grande résistivité : c'est un très bon isolant (environ $10^{14}$ $\Omega$.cm). La valeur élevée de ce paramètre explique comment une image électrostatique peut ainsi être conservée pendant des temps aussi longs qu'une seconde et plus. Ceci ne peut être obtenu avec des semiconducteurs, les courants d'obscurité effaçant rapidement l'image électrostatique.

Un des films photoconducteurs les plus couramment utilisés de nos jours est celui formé de polyvinylcarbazole.

Dans le polyvinylcarbazole ou PVK, les groupements carbazolyle sont répartis le long de la chaîne vinylique et il existe un certain recouvrement des orbitales $\pi$ de ces groupements. Bien que ce recouvrement autorise sous l'effet du champ électrique le déplacement de charges photogénérées, on comprendra qu'un recouvrement d'orbitales $\pi$ ne permettra pas une très grande mobilité des porteurs. Effectivement les valeurs de la mobilité obtenues dans le PVK oscillent autour de $10^{-7}$-$10^{-6}$cm$^2$/V.s.

Le domaine de sensibilité du PVK est réduit au départ au domaine du proche ultra-violet. C'est-à-dire qu'il ne sera pas possible de valablement utiliser ce matériau à l'aide de longueur d'onde située dans le domaine du visible, voire de l'infrarouge. Il est cependant connu d'étendre la photosensibilité du PVK dans les domaines du visible ou de l'infrarouge par dopage avec une autre molécule organique qui forme un complexe à transfert de charge. L'exemple type est la molécule de trinitrofluorénone (TNF) qui permet une sensiblisation du PVK jusque vers 650 nm. On rappelle que les longueurs d'onde du domaine visible sont comprises entre 400 et 800 nm. D'autres molécules sont susceptibles de former avec le carbazole des complexes à transfert de charge et donc de photosensibiliser le PVK. Il s'agit en particulier des chloronaphtoquinones et surtout des sels de pyrylium qui ont été particulièrement étudiés par la Demanderesse. Ces dernières molécules permettent une sensibilisation jusque vers 850 nm, voire 1100 nm, c'est-à-dire dans la zone de l'infrarouge (ouvrant donc le domaine des lasers à semiconducteurs ou des lasers YAG).

Par ailleurs, on étudie actuellement en laboratoire la possibilité d'utiliser à titre de matériau photoconducteur des polysilanes (PS) qui présentent un squelette à base de liaisons Si-Si.

La particularité du PS par rapport au PVK est d'avoir une chaîne-squelette composée uniquement d'atomes de silicium. Dans ce cas, le recouvrement d'orbitales à prendre en compte est celui des orbitales atomiques sigma, tout comme d'ailleurs dans le semiconducteur silicium. Dans ces conditions, la mobilité des porteurs est beaucoup plus élevée : d'après les données de la littérature, elle oscille autour de $10^{-5}$ $cm^2/V.s$.

Toutefois, jusqu'à présent les polysilanes connus présentent une gamme de sensibilité étroite limitée en deçà du proche ultra-violet. Il a même été constaté une dégradation du polysilane lorsque celui-ci est éclairé à une longueur d'onde dans le proche ultra-violet.

Il est donc souhaitable, et c'est l'un des objets de la présente invention, de trouver d'autres polysilanes qui tout en conservant la mobilité des porteurs propres à ces polymères puissent révéler une photosensibilité dans une gamme beaucoup plus large et notamment dans le visible et éventuellement l'infrarouge.

On connaît, par ailleurs, des polysilanes résistant aux radiations UV obtenues par réaction de $PhSiMeCl_2$ avec le N-carbazoyl-3-propylméthyldichlorosilane (C.A. : 119,73820c et JP 0543,702).

Les polysilanes selon l'invention présentent également d'autres avantages inattendus :

Il est ainsi possible d'obtenir par effet corona -toutes conditions égales par ailleurs- une charge électrique de surface nettement supérieure en comparaison de ce que l'on peut obtenir avec le PVK. Comme le rendement de photogénération et la mobilité croissent tous les deux avec le champ électrique appliqué, il est possible d'utiliser ces matériaux à des champs électriques supérieurs à ceux des autres photoconducteurs actuels et améliorer leur comportement.

De plus, comme dans tout matériau, il existe des impuretés ou des "défauts" de structure propre à piéger les charges électriques en déplacement dans le volume des conducteurs. Ce phénomène est bien connu et largement étudié dans les semiconducteurs. Il a été trouvé que le PS selon l'invention contenait de 100 à 1000 fois moins de pièges que le PVK. Cette propriété revêt une grande importance si l'on considère que lorsque l'on veut enregistrer une image, il est nécessaire que l'image précédente soit bien effacée, c'est-à-dire que le champ électrostatique exploité ne soit pas dû à des charges piégées lors de la création de l'image précédente.

Un autre objet particulier de la présente invention est de proposer une valve optique à base d'un cristal liquide, notamment pour télécommunication optique.

D'autres objets et avantages de la présente invention apparaîtront au vu de la description qui va suivre.

L'invention concerne en premier lieu un polymère statistique de silane greffé photoconducteur à mobilité de porteurs élevée de formule :

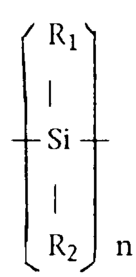

(I)

dans laquelle :

$R_1$ identique ou différent est choisi parmi les radicaux alkyle de 1 à 6 atomes de carbone,,

$R_2$ identique ou différent est choisi parmi les radicaux alkyle de 1 à 6 atomes de carbone, phényle éventuellement substitué par un ou plusieurs radicaux alkyle de 1 à 6 atomes de carbone, ou les radicaux -A-Het où A est une simple liaison $\sigma$, une chaîne divalente à électrons $\pi$ délocalisés ou un noyau 1,2- ou 1,3- ou 1,4, phénylène, Het

est un hétérocycle aromatique azoté, polynucléaire, comportant au moins 9 atomes dont 1 à 4 hétéroatomes, ledit hétérocycle étant éventuellement substitué par un ou plusieurs groupements donneur d'électrons y compris les radicaux alkyle de 1 à 6 atomes de carbone, ou phényle,
n est un nombre entier supérieur ou égal à 10,
à la condition qu'au moins 10 % en nombre des radicaux $R_2$ correspondent au radical -A-Het.

Les extrémités $R_3$, $R_4$ du polymère statistique de formule (1) peuvent être diverses et dépendent du procédé de synthèse et de récupération du polymère considéré. Parmi les atomes ou radicaux $R_3$, $R_4$, on peut citer les atomes d'hydrogène, de chlore, des radicaux hydroxyle, alcoxyle, alkyle inférieur, aryle, trialkylsilyle, triarylsilyle.

Par polymère photoconducteur à mobilité de porteurs élevée, on entendra de manière générale un matériau dont les valeurs de mobilité sont supérieures à $10^{-6}cm^2/V.s$, notamment supérieures à $5.10^{-5}cm^2/V.s$. Cette mobilité est aisément mesurable au moyen des connaissances normales de l'homme du métier.

Le terme polymère recouvre à la fois les homopolymères greffés par les radicaux A-Het et les copolymères obtenus par polymérisation de monomères différents.

Par chaîne divalente à électrons $\pi$ délocalisés, on entend une chaîne qui présente un système délocalisé d'électrons $\pi$ permettant de déplacer la charge qui a été formée sur l'hétérocycle aromatique azoté du fait du rayonnement électromagnétique.

Parmi les autres hétéroatomes que l'azote pouvant éventuellement être présents dans la molécule hétérocyclique, on peut citer le soufre, l'oxygène, le phosphore.

Par hétérocycle comportant au moins 9 atomes, on veut spécialement désigner les hétérocycles di ou trinucléaire (à cycles accolés) comportant 9 à 15 atomes. De préférence, le radical Het est attaché par un atome d'azote.

Parmi les radicaux hétérocycliques, on peut citer en général les radicaux : "isoindolyle, indolyle, indazolyle, purinyle, quinolyle, naphtyridinyle, quinoxalinyle, quinazolinyle, cinnolinyle, carbazolyle, β carbonilyle, acridinyle, phénantridinyle, phénazinyle, phénothiazinyle, phénoxazinyle, benzimidazolyle, iminostilbényle".

Parmi les radicaux hétérocyliques aromatiques azotés attachés par l'atome d'azote, on peut citer ceux choisis dans le groupe suivant :

isoindol 2-yl, indol 1-yl, indazol 1-yl, purin 7-yl, carbazol 9-yl, β-carbolin 9-yl, phénothiazin 10-yl, phenoxazin 10-yl, benzimidazol 1-yl, dibenz [b,f] azepin 5-yl.

Les variantes préférées de réalisation du polymère selon l'invention, éventuellement prises en combinaison, sont indiquées ci-après :

- n est compris entre 10 et 500, de préférence inférieur à 100,
- Entre 20 et 50 % des radicaux $R_2$ correspondent au radical A-Het.
- $R_1$ est un radical méthyle,
- $R_2$, est un radical alkyle ou phényle, ou A-Het
- A est une chaîne divalente insaturée choisie dans le groupe constitué par -CH=CH- ; -C≡C-,-CH=CH-CH=CH- ou est une simple liaison, ou un noyau 1,4-phénylène éventuellement substitué par un ou plusieurs radicaux alkyle inférieur,
- Le radical Het est le carbazol 9-yl.

L'invention concerne également les procédés de préparation des polymères décrits ci-dessus.

Un procédé de préparation des polymères de formule I comprend les étapes suivantes :

Un polyalkylphénylsilane de formule :

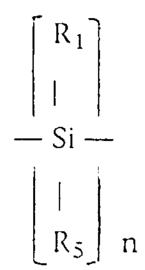

(II)

n, $R_1$ ayant l'une des significations précédemment indiquées,
$R_5$ étant un radical phényle éventuellement substitué qui possède des extrémités terminales $R_3$, $R_4$
est mis à réagir avec l'acide trifluorométhanesulfonique (acide triflique: TfOH) dans une proportion molaire unité $-R_1R_5Si-$ : acide triflique compris entre 1 et 10, en milieu solvant aprotique inerte, tel qu'un solvant aromatique, à

température voisine de 0°C afin d'obtenir le composé de formule :

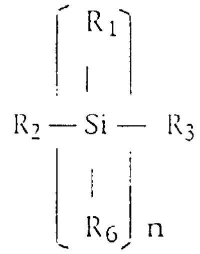

(III)

dans laquelle $R_6$ est choisi parmi $R_5$ ou le radical OTf (triflate), 10 % au moins des radicaux $R_6$ correspondant au radical OTf, de préférence 10 à 50 %.

Le composé de formule III en solution dans un solvant aprotique inerte est ajouté à une suspension dans le même solvant aprotique inerte d'un composé organométallique de formule :

$$M - A - Het \qquad (IV)$$

M étant un atome de lithium ou MgCl ou MgBr (obtenu par action d'un alkyl lithium sur le composé H-A-llet ou Hal-A-Het ou du magnésium sur le composé Hal-A-Het où Hal = halogène), en excès, en équivalent molaire, par rapport au radical OTf, à une température voisine de 0°C. Après ajout éventuel d'organolithien tel qu'un alkyllithium afin d'éliminer toute présence résiduelle de radical OTf, précipitation en milieu alcoolique, notamment dans le méthanol, on obtient le composé de formule I souhaité.

Le composé de formule II est obtenu de manière connue.

Selon un autre procédé de préparation, on fait réagir dans une première étape un composé de formule :

$$R_7R_1SiCl_2 \qquad (V)$$

$R_1$ ayant la même signification que celle indiquée précédemment,

$R_7$ étant choisi parmi les radicaux alkyle de 1 à 6 atomes de carbone, phényle éventuellement substitué par un ou plusieurs radicaux alkyle de 1 à 6 atomes de carbone, avec un composé de formule :

$$(Het—A)R_1SiCl_2 \qquad (VI)$$

A, Het ayant l'une des significations précédemment indiquées.

Le rapport en équivalent molaire VI:V étant supérieur à 1:9, éventuellement 1:0 (homopolymère), de préférence compris entre 1:4 et 1 en présence de sodium dans un solvant inerte tel qu'un solvant aromatique comme le toluène éventuellement en mélange avec un cosolvant comme le diglyme. Le polymère récupéré est éventuellement dissout et précipité afin d'éliminer la fraction de faible masse molaire et obtenir le polysilane de formule I souhaité.

Les composés de formule V et VI sont obtenus de manière connue.

L'invention a également pour objet un film formé d'un polymère photoconducteur selon l'invention. Ce film est obtenu de manière connue par les procédés de couchage communément employés.

Ce film présentera généralement une épaisseur de quelques micromètres, par exemple entre 0,5 et 50 micromètres.

Comme ceci a déjà été indiqué précédemment, le film photoconducteur selon l'invention permet l'enregistrement de l'image électrostatique, qui sera ensuite révélée par un autre matériau.

Selon une variante particulière le film décrit précédemment sera dopé avec une molécule organique formant un complexe à transfert de charge, notamment la trinitrofluorénone (TNF).

Ce complexe à transfert de charge est de préférence présent entre 1 et 50 % en poids par rapport au poids du film total.

D'autres composés peuvent également être utilisés dont on peut citer ceux compris dans le groupe constitué par

les chloronaphtoquinones et les sels de pyrylium. Ces composés sont utilisés lorsque l'on souhaite obtenir une sensibilisation dans l'infrarouge.

Ces composés sont associés aux polymères lors de sa mise en oeuvre.

L'invention a donc également pour objet un procédé de formation d'une image électrostatique consistant à appliquer sur un film selon l'invention un champ électrique, notamment d'une valeur comprise entre 100 et $2.10^8$ V/m, puis à soumettre le film chargé à un éclairement inhomogène par un rayonnement électromagnétique approprié.

De préférence, le champ électrique est appliqué par effet corona bien que d'autres techniques puissent être envisagées sans sortir du cadre de la présente invention.

Il a été trouvé de façon inattendue, que la charge notamment par effet corona, qui peut être obtenue -toutes conditions égales par ailleurs- est plus élevée que celle qu'il est possible d'obtenir avec les polyvinylcarbazoles. De ce fait, il est possible d'envisager d'appliquer des champs électriques supérieurs à ceux communément utilisés pour les autres photoconducteurs.

On a également trouvé que les films selon l'invention présentaient un nombre très inférieur de défauts de structure propre à piéger les charges électriques en déplacement dans le volume des conducteurs. Cela conduit à un meilleur effaçage de l'image électrostatique précédente.

L'invention trouve un intérêt tout particulier dans le domaine des valves optiques. La valve optique selon l'invention est formée d'une couche de cristal liquide comme c'est bien connu de l'homme du métier et d'un film décrit précédemment. L'ensemble est pris en sandwich entre deux électrodes transparentes, la tension entre ces deux électrodes étant généralement de l'ordre de la dizaine de volts.

Une valve optique selon l'invention est décrite à l'aide de la figure 1 annexée. La valve optique 1 est formée d'un film photoconducteur 2 comprenant une première face 3 et une seconde face 4. A la première face 3 est appliquée une électrode transparente négative 5 et sur la seconde face 4 une couche 6 de cristal liquide d'environ 1 à 10 µm d'épaisseur. A la surface 7 du cristal liquide est appliquée une électrode transparente positive 8.

L'invention peut également convenir à l'exploitation d'images électrostatiques par caméras holographiques. Le matériau pour caméra holographique est formé d'un film thermoplastique communément employé dans l'art et d'un film tel que décrit précédemment pour photoconducteurs.

L'invention a également pour objet un procédé de révélation de l'image électrostatique telle qu'elle a été formée sur le film photoconducteur par mise en contact du film avec une poudre de particules organiques chargée de noir de carbone, en anglais "toner", puis mise en contact d'une feuille de papier avec le film recouvert localement de la poudre de particules et chauffage de la feuille de papier de manière à provoquer la fusion du toner.

L'invention est maintenant illustrée par les exemples suivants :

<u>Exemple 1</u>

I - Préparation d'un polysilane à motifs $-(CbzMeSi)_x-$ $(MePhSi)_y-(n\text{-}BuMeSi)_z-$ (avec $Cb_z$ = carbazol 9-yl).

Une suspension de 9-carbazolyllithium est préparée en faisant agir à température ambiante 3,4 ml (8,32 mmol) de n-BuLi (2,5M dans l'hexane) sur 1,42 g (8,49 mmol) de carbazole dans 25 ml de toluène. Le mélange est porté à reflux pendant 90 min, puis est refroidi à 0°C.

A cette suspension très épaisse est alors additionnée goutte-à-goutte, la solution obtenue par action de 380 µl (4,30 mmol) de TfOH sur 1 g (8,32 mmol en unité -MePhSi-) de Polyméthylphénylsilane (PMPS) (échantillon à distribution bimodale des masses molaires $\overline{M}_n$ = 5200 (91 %) et $\overline{M}_n$ = 125 000 (9%)) dans 20 ml de toluène à 0°C.

On laisse réagir à température ambiante avant de porter à ébullition pendant 2 heures. Après refroidissement à 0°C, 0,86 ml (2,15 mmol) de n-BuLi (2,5M dans l'hexane) sont additionnés. Ce mélange est ensuite agité pendant 1 h à température ambiante, puis versé dans 400 ml de MeOH absolu.

Le précipité floconneux est recueilli par filtration, lavé au MeOH et séché sous vide (0,36 g). Après une reprécipitation supplémentaire dans du MeOH, on récupère 0,30 g de polymère ne contenant plus de fraction d'oligomères et présentant les caractéristique suivantes :

$\overline{M}_n$ = 5500
$\overline{M}_p$ = 12700
x:y:z=0,2:0,6:0,2.

<u>Exemple 2</u>

II - Préparation d'un polysilane à motifs $-(Cbz\text{-}p\text{-}C_6H_4MeSi)_x-(MePhSi)_y-(n\text{-}BuMeSi)_z$

Une solution de 4-(9-carbazolyl)phényllithium est préparée en ajoutant une solution de 0,49 g (1,5 mmol) de 9-(4-bromophényl)carbazole dans 5 ml $Et_2O$ et 2 ml de toluène à 1,0 ml (2,50 mmol) de n-BuLi (2,5 M dans l'hexane) et

en maintenant la température inférieure à -50°C.

Après 10 min, cette solution réchauffée à environ -20°C est additionnée très lentement au mélange obtenu après réaction à 0°C de 370 µl (4,16 mmol) de TfOH sur 1 g (8,32 mmol en unité -MePhSi-) de PMPS dissout dans 20 ml de toluène.

Après 2 h de réaction à température ambiante, la majorité de l'éther est évaporée sous un courant d'argon et en chauffant à 40°C pendant 30 min.

Après refroidissement à 0°C, 1,6 ml (4,16 mmol) de n-BuLi (2,5M dans l'hexane) sont additionnés. Le mélange est agité pendant 1 h et versé finalement dans 500 ml de MeOH absolu. Le polymère précipité est recueilli par filtration, lavé au MeOH, puis séché sous vide (0,90 g) et présente les caractéristiques suivantes :

$\overline{M}_n = 3700$
$\overline{M}_p = 6200$
x:y:z=0,3:0,6:0,1.

Après deux reprécipitations supplémentaires dans l'isopropanol, on récupère 0,55 g de polymère contenant encore 11 % d'une fraction d'oligomères de faibles masses molaires.

<u>III</u> - <u>Evolution du rendement de photogénération en fonction de la longueur d'onde pour un polysilane selon l'exemple II dopé au TNF</u>

Un film de polysilane comportant 5 % en poids de TNF est couché et transformé en un film d'épaisseur moyenne de 3,8 micromètres.

On applique à ce film un champ électrique de 1 MV/cm puis un rayonnement électromagnétique de longueur d'onde déterminée.

La figure 2 en annexe montre l'évolution du rendement de photogénération en fonction de la longueur d'onde d'excitation à 50°C.

<u>IV</u> - <u>Evaluation de la mobilité d'un polysilane selon l'exemple II</u>

Pour le même polysilane que celui testé à l'exemple III avec un champ électrique appliqué de 1 MV/cm, on évalue la mobilité des porteurs à 25°C.

Un film photoconducteur d'épaisseur 9,6 µm placé entre deux électrodes en or est soumis à un champ électrique de 0,25 MV/cm et éclairée du côté de l'électrode positive par une longueur d'onde λ = 514 nm.

La mobilité est indiquée à la Figure 3 en annexe en nano ampère/cm$^2$ en fonction du temps en milliseconde pour des nombres de photons par cm$^2$ et par seconde différents. La valeur de la mobilité, déduite de la mesure de la montée en courant en fonction du temps est de 3,2.10$^{-5}$ cm$^2$/V.s.

**Revendications**

**1.** Polymère statistique de silane greffé photoconducteur à mobilité de porteurs élevée de formule :

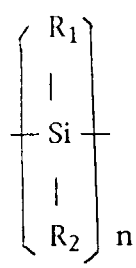

(I)

dans laquelle :

$R_1$ identique ou différent est choisi parmi les radicaux alkyle de 1 à 6 atomes de carbone,
$R_2$ identique ou différent est choisi parmi les radicaux alkyle de 1 à 6 atomes de carbone, phényle éventuellement substitués par un ou plusieurs radicaux alkyle de 1 à 6 atomes de carbone, ou les radicaux -A-Het où A est une simple liaison σ, une chaîne divalente à électrons π délocalisés ou un noyau 1,2- ou 1,3- ou 1,4 phénylène, Het est un hétérocycle aromatique azoté, polynucléaire, comportant au moins 9 atomes dont 1 à 4 hétéroatomes, ledit hétérocycle étant éventuellement substitué par un ou plusieurs groupements donneur

d'électrons y compris les radicaux alkyle de 1 à 6 atomes de carbone, ou phényle,
n est un nombre entier supérieur ou égal à 10,
à la condition qu'au moins 10 % en nombre des radicaux $R_2$ correspondent au radical -A-Het.

**2.** Polymère selon la revendication 1, caractérisé en ce que n est un nombre entier compris entre 10 et 500.

**3.** Polymère selon la revendication 1, caractérisé en ce que $R_1$ est un radical méthyle.

**4.** Polymère selon la revendication 1, caractérisé en ce que $R_2$ est un radical alkyle ou phényle ou A-Het.

**5.** Polymère selon la revendication 1, caractérisé en ce qu'entre 10 et 50 % des radicaux $R_2$ correspondent au radical A-Het.

**6.** Polymère selon l'une des revendications 1 ou 5, caractérisé en ce que la chaîne divalente insaturée A est choisie dans le groupe constitué par -CH=CH-, -C≡C-, -CH=CH-CH=CH-, ou est une simple liaison ou est un noyau 1,4-phénylène éventuellement substitué par un ou plusieurs radicaux alkyle inférieur.

**7.** Polymère selon l'une des revendications 1 ou 5 caractérisé en ce que Het est choisi dans le groupe suivant :
"isoindolyle, indolyle, indazolyle, purinyle, quinolyle, naphtyridinyle, quinoxalinyle, quinazolinyle, cinnolinyle, carbazolyle, β carbonilyle, acridinyle, phénantridinyle, phénazinyle, phénothiazinyle, phénoxazinyle, benzimidazolyle, iminostilbényle".

**8.** Polymère selon la revendication 7, caractérisé en ce que Het est choisi dans le groupe suivant :
isoindol 2-yl, indol 1-yl, indazol 1-yl, purin 7-yl, carbazol 9-yl, β-carbolin 9-yl, phenoxazin 10-yl, benzimidazol 1-yl, dibenz [b,f] azepin 5-yl, de préférence le groupe carbazol 9-yl.

**9.** Film photoconducteur constitué d'un polysilane selon l'une des revendications 1 à 8.

**10.** Film selon la revendication 9, caractérisé en ce que l'épaisseur est comprise entre 0,5 à 50 micromètres.

**11.** Procédé de formation d'une image électrostatique consistant à appliquer sur un film selon l'une des revendications 9 ou 10 un champ électrique notamment d'une valeur comprise entre 100 et $2.10^8$ V/m puis à soumettre le film chargé à un éclairement inhomogène par un rayonnement électromagnétique.

**12.** Procédé selon la revendication 11, caractérisé en ce que le champ électrique est appliqué par effet corona.

**13.** Valve optique (1) caractérisée en ce qu'elle est formée d'une couche de cristal liquide (6) et d'un film (2) selon l'une des revendications 9 ou 10, l'ensemble étant pris en sandwich entre deux électrodes transparentes (5 et 8).

**14.** Matériau pour caméra holographique formé d'un film thermoplastique et d'un film selon l'une des revendications 9 ou 10.

**15.** Procédé de préparation des polymères selon l'une des revendications 1 à 8, caractérisé en ce qu'il comprend les étapes suivantes : Un polyalkylphénylsilane de formule :

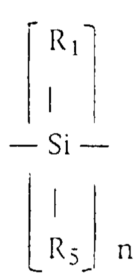

(II)

n, $R_1$ ayant l'une des significations précédemment indiquées,
$R_5$ étant un radical phényle éventuellement substitué est mis à réagir avec l'acide trifluorométhanesulfonique dans une proportion molaire unité $-R_1R_5Si-$ : acide triflique compris entre 1 et 10, en milieu solvant aprotique

inerte, tel qu'un solvant aromatique, afin d'obtenir le composé de formule :

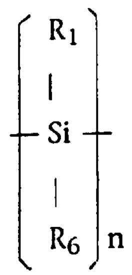

(III)

dans laquelle $R_6$ est choisi parmi $R_5$ ou le radical OTf (triflate), 10 % au moins des radicaux $R_6$ correspondant au radical OTf, de préférence 10 à 50 %,

le composé de formule III en solution dans un solvant aprotique inerte est ajouté à une suspension en solvant aprotique inerte d'un composé organométallique de formule : M - A - Het (IV), A, Het ayant l'une des significations précédemment indiquées, M étant un atome de lithium ou MgCl ou MgBr en excès en équivalent molaire, par rapport au radical OTf, après ajout éventuel d'organolithien tel qu'un alkyllithium afin d'éliminer toute présence résiduelle de radical OTf, précipitation en milieu alcoolique, notamment dans le méthanol,

ou on fait réagir dans une première étape un composé de formule :

$$R_7R_1SiCl_2 \qquad (V)$$

$R_1$ ayant la même signification que celle indiquée précédemment,

$R_7$ étant choisi parmi les radicaux alkyle de 1 à 6 atomes de carbone, phényle éventuellement substitué par un ou plusieurs radicaux alkyle de 1 à 6 atomes de carbone, avec un composé de formule :

$$(Het—A)R_1SiCl_2 \qquad (VI)$$

Le rapport en équivalent molaire VI:V étant supérieur à 1:9, éventuellement 1:0 (homopolymère), de préférence compris entre 1:4 et 1 en présence de sodium dans un solvant inerte tel qu'un solvant aromatique comme le toluène éventuellement en mélange avec un cosolvant comme le diglyme,

éventuellement la fraction de faible masse molaire du polymère récupéré est éliminée.

## Patentansprüche

1. Photoleitendes, gepfropftes, statistisches Silan-Polymer mit einer hohen Ladungsträger-Mobilität der Formel:

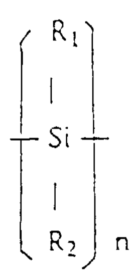

(I)

in der:

$R_1$, identisch oder verschieden, aus Alkylresten mit 1 bis 6 Kohlenstoffatomen ausgewählt ist,

$R_2$, identisch oder verschieden, aus Alkylresten mit 1 bis 6 Kohlenstoffatomen, Phenyl, das gegebenenfalls durch einen oder mehrere Alkylreste mit 1 bis 6 Kohlenstoffatomen substituiert ist, oder Resten -A-Het ausgewählt ist, worin A eine Einfachbindung $\sigma$, eine zweiwertige Kette mit delokalisierten $\pi$-Elektronen oder ein 1,2- oder 1,3- oder 1,4-Phenylenring ist, Het ein polycyclischer, stickstoffhaltiger, aromatischer Heterocyclus ist, der mindestens 9 Atome umfaßt, davon 1 bis 4 Heteroatome, wobei der Heterocyclus gegebenenfalls durch eine oder mehrere Elektronendonor-Gruppen, einschließlich Alkylresten mit 1 bis 6 Kohlenstoffatomen, oder Phenyl substituiert ist,
n eine ganze Zahl gleich oder oberhalb von 10 ist,
mit der Maßgabe, daß mindestens 10% der Zahl der Reste $R_2$ dem Rest -A-Het entsprechen.

**2.** Polymer nach Anspruch 1, dadurch gekennzeichnet, daß n eine ganze Zahl zwischen 10 und 500 eingeschlossen ist.

**3.** Polymer nach Anspruch 1, dadurch gekennzeichnet, daß $R_1$ ein Methylrest ist.

**4.** Polymer nach Anspruch 1, dadurch gekennzeichnet, daß $R_2$ ein Alkyl- oder Phenyl- oder A-Het-Rest ist.

**5.** Polymer nach Anspruch 1, dadurch gekennzeichnet, daß zwischen 10 und 50% der Reste $R_2$ dem Rest A-Het entsprechen.

**6.** Polymer nach einem der Ansprüche 1 oder 5, dadurch gekennzeichnet, daß die zweiwertige ungesättigte Kette A aus der Gruppe ausgewählt ist, die aus -CH=CH-, -C≡C-, -CH=CH-CH=CH- besteht, oder eine Einfachbindung ist oder ein 1,4-Phenylenring ist, der gegebenenfalls durch einen oder mehrere Niederalkylreste substituiert ist.

**7.** Polymer nach einem der Ansprüche 1 oder 5, dadurch gekennzeichnet, daß Het aus der folgenden Gruppe ausgewählt ist:
Isoindolyl, Indolyl, Indazolyl, Purinyl, Chinolyl, Naphthyridinyl, Chinoxalinyl, Chinazolinyl, Cinnolinyl, Carbazolyl, β-Carbonilyl, Acridinyl, Phenantridinyl, Phenazinyl, Phenothiazinyl, Phenoxazinyl, Benzimidazolyl, Iminostilbenyl.

**8.** Polymer nach Anspruch 7, dadurch gekennzeichnet, daß Het aus der folgenden Gruppe ausgewählt ist:
Isoindol-2-yl, Indol-1-yl, Indazol-1-yl, Purin-7-yl, Carbazol-9-yl, β-Carbolin-9-yl, Phenoxazin-10-yl, Benzimidazol-1-yl, Dibenz[b,f]azepin-5-yl, vorzugsweise die Gruppe Carbazol-9-yl.

**9.** Photoleitender Film, der aus einem Polysilan nach einem der Ansprüche 1 bis 8 zusammengesetzt ist.

**10.** Film nach Anspruch 9, dadurch gekennzeichnet, daß die Dicke zwischen 0,5 bis 50 Mikrometer eingeschlossen ist.

**11.** Verfahren zur Herstellung eines elektrostatischen Bildes, das darin besteht, an einem Film gemäß einem der Ansprüche 9 oder 10 ein elektrisches Feld anzulegen, insbesondere mit einem Wert, der zwischen 100 und $2 \cdot 10^8$ V/m eingeschlossen ist, dann den geladenen Film durch elektromagnetische Strahlung einer inhomogenen Beleuchtung zu unterziehen.

**12.** Verfahren nach Anspruch 11, dadurch gekennzeichnet, daß das elektrische Feld durch einen Koronaeffekt angelegt wird.

**13.** Optisches Ventil (1), dadurch gekennzeichnet, daß es aus einer Flüssigkristallschicht (6) und einem Film (2) gemäß einem der Ansprüche 9 oder 10 gebildet ist, wobei das ganze als Sandwich zwischen zwei transparenten Elektroden (5 und 8) vorliegt.

**14.** Material für eine holographische Kamera, das aus einem thermoplastischen Film und einem Film gemäß einem der Ansprüche 9 oder 10 gebildet ist.

**15.** Verfahren zur Herstellung von Polymeren gemäß einem der Ansprüche 1 bis 8, dadurch gekennzeichnet, daß es die folgenden Schritte umfaßt:

Ein Polyalkylphenylsilan der Formel:

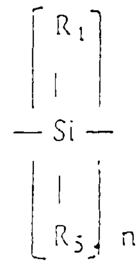

(II)

wobei n, $R_1$ eine der vorstehend angegebenen Bedeutungen aufweisen,
$R_5$ ein gegebenenfalls substituierter Phenylrest ist, wird mit Trifluormethansulfonsäure in einem Moleinheitenverhältnis $-R_1R_5Si-$:Trifluormethansulfonsäure zwischen 1 und 10 eingeschlossen in einem aprotischen inerten Lösungsmittelmedium, wie einem aromatischen Lösungsmittel, umgesetzt, um eine Verbindung der Formel:

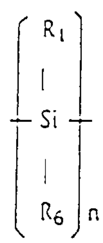

(III)

zu erhalten, in der $R_6$ aus $R_5$ oder dem Rest OTf (Triflat) ausgewählt ist, wobei mindestens 10%, vorzugsweise 10 bis 50%, der Reste $R_6$ dem Rest OTf entsprechen,
die Verbindung der Formel III, gelöst in einem inerten aprotischen Lösungsmittel, wird zu einer Suspension einer organometallischen Verbindung der Formel: M-A-Het (IV), wobei A, Het eine der vorstehend angegebenen Bedeutungen aufweisen, M ein Lithiumatom oder MgCl oder MgBr ist, im Überschuß über ein Moläquivalent, bezogen auf den Rest OTf, in einem inerten aprotischen Lösungsmittel gegeben, danach gegebenenfalls Zugabe von Organolithium, wie einem Alkyllithium, um jegliche verbleibende Anwesenheit des Restes OTf zu beseitigen, Ausfällung in alkoholischem Medium, insbesondere in Methanol,
oder man setzt in einem ersten Schritt eine Verbindung der Formel:

$$R_7R_1SiCl_2 \quad (V)$$

wobei $R_1$ die gleiche Bedeutung wie vorstehend angegeben aufweist,
$R_7$ aus Alkylresten mit 1 bis 6 Kohlenstoffatomen, Phenyl, das gegebenenfalls durch einen oder mehrere Alkylreste mit 1 bis 6 Kohlenstoffatomen substituiert ist, ausgewählt ist, mit einer Verbindung der Formel:

$$(Het\text{-}A)R_1SiCl_2 \quad (VI)$$

wobei das Verhältnis der Moläquivalente VI:V oberhalb von 1:9, gegebenenfalls 1:0 (Homopolymer), vorzugsweise zwischen 1:4 und 1 eingeschlossen ist, in Anwesenheit von Natrium in einem inerten Lösungsmittel, wie einem aromatischen Lösungsmittel wie Toluol, gegebenenfalls in Mischung mit einem Cosolvens, wie Diglyme, um, wobei gegebenenfalls die Fraktion des gewonnenen Polymers mit geringer Molmasse beseitigt wird.

## Claims

1. Photoconductive grafted random silane polymer with high carrier mobility of formula:

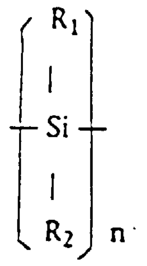

(I)

in which:

$R_1$, which is identical or different, is chosen from alkyl radicals comprising 1 to 6 carbon atoms,
$R_2$, which is identical or different, is chosen from alkyl radicals comprising 1 to 6 carbon atoms, phenyl radicals optionally substituted by one or more alkyl radicals comprising 1 to 6 carbon atoms, or -A-Het radicals, where A is a $\sigma$ single bond, a divalent chain with delocalized n electrons or a 1,2- or 1,3- or 1,4-phenylene nucleus and Het is a polynuclear nitrogenous aromatic heterocycle comprising at least 9 atoms, including 1 to 4 heteroatoms, the said heterocycle optionally being substituted by one or more electron-donating groups, including alkyl radicals comprising 1 to 6 carbon atoms or phenyl radicals,
n is an integer greater than or equal to 10,
provided that at least 10% by number of the $R_2$ radicals correspond to the -A-Het radical.

**2.** Polymer according to Claim 1, characterized in that n is an integer between 10 and 500.

**3.** Polymer according to Claim 1, characterized in that $R_1$ is a methyl radical.

**4.** Polymer according to Claim 1, characterized in that $R_2$ is an alkyl or phenyl or -A-Het radical.

**5.** Polymer according to Claim 1, characterized in that between 10 and 50% of the R2 radicals correspond to the -A-Het radical.

**6.** Polymer according to either of Claims 1 and 5, characterized in that the divalent unsaturated chain A is chosen from the group consisting of -CH=CH-, -C≡C- or -CH=CH-CH=CH-, or is a single bond or is a 1,4-phenylene nucleus optionally substituted by one or more lower alkyl radicals.

**7.** Polymer according to either of Claims 1 and 5, characterized in that Het is chosen from the following group:
"isoindolyl, indolyl, indazolyl, purinyl, quinolyl, naphthyridinyl, quinoxalinyl, quinazolinyl, cinnolinyl, carbazolyl, β-carbolinyl, acridinyl, phenanthridinyl, phenazinyl, phenothiazinyl, phenoxazinyl, benzimidazolyl or iminostilbenyl".

**8.** Polymer according to Claim 7, characterized in that Het is chosen from the following group:
isoindol-2-yl, indol-1-yl, indazol-1-yl, purin-7-yl, carbazol-9-yl, β-carbolin-9-yl, phenoxazin-10-yl, benzimidazol-1-yl or dibenz[b,f]azepin-5-yl, preferably the carbazol-9-yl group.

**9.** Photoconductive film composed of a polysilane according to one of Claims 1 to 8.

**10.** Film according to Claim 9, characterized in that the thickness is between 0.5 and 50 micrometres.

**11.** Process for the formation of an electrostatic image, which consists in applying an electric field, in particular with a value of between 100 and $2 \times 10^8$ V/m, to a film according to either of Claims 9 and 10 and in then subjecting the charged film to non-homogeneous illumination by electromagnetic radiation.

**12.** Process according to Claim 11, characterized in that the electric field is applied by a corona effect.

**13.** Optical valve (1), characterized in that it is formed of a liquid crystal layer (6) and of a film (2) according to either of Claims 9 and 10, the assembly being sandwiched between two transparent electrodes (5 and 8).

**14.** Material for holographic camera formed of a thermoplastic film and of a film according to either of Claims 9 and 10.

**15.** Process for the preparation of the polymers according to one of Claims 1 to 8, characterized in that it comprises the following stages:

a polyalkylphenylsilane of formula:

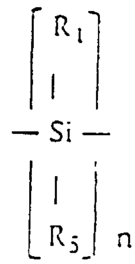 (II)

n and $R_1$ having one of the meanings indicated above,
$R_5$ being an optionally substituted phenyl radical, is reacted with trifluoromethanesulphonic acid in an $-R_1R_5Si-$ unit: triflic acid molar proportion of between 1 and 10, in inert aprotic solvent medium, such as an aromatic solvent, in order to obtain the compound of formula:

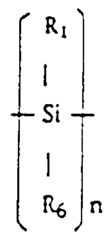 (III)

in which $R_6$ is chosen from $R_5$ or the OTf (triflate) radical, at least 10%, preferably 10 to 50%, of the $R_6$ radicals corresponding to the OTf radical,
the compound of formula (III), in solution in an inert aprotic solvent, is added to a suspension, in inert aprotic solvent, of an organometallic compound of formula M-A-Het (IV), A and Het having one of the meanings indicated above and M being a lithium atom or MgCl or MgBr, in excess as molar equivalent with respect to the OTf radical, after optional addition of an organolithium compound, such as an alkyllithium, in order to remove any residual presence of OTf radical, and the product is precipitated in alcoholic medium, in particular from methanol,
or, in a first stage, a compound of formula:

$$R_7R_1SiCl_2 \qquad (V)$$

$R_1$ having the same meaning as that indicated above,
$R_7$ being chosen from alkyl radicals comprising 1 to 6 carbon atoms or the phenyl radical optionally substituted by one or more alkyl radicals comprising 1 to 6 carbon atoms, is reacted with a compound of formula:

$$(Het\text{-}A)R_1SiCl_2 \qquad (VI)$$

the (VI):(V) ratio as molar equivalent being greater than 1:9, optionally 1:0 (homopolymer), preferably of between 1:4 and 1, in the presence of sodium in an inert solvent, such as an aromatic solvent, such as toluene, optionally as a mixture with a cosolvent, such as diglyme,
and the fraction of low molar mass of the polymer recovered is optionally removed.

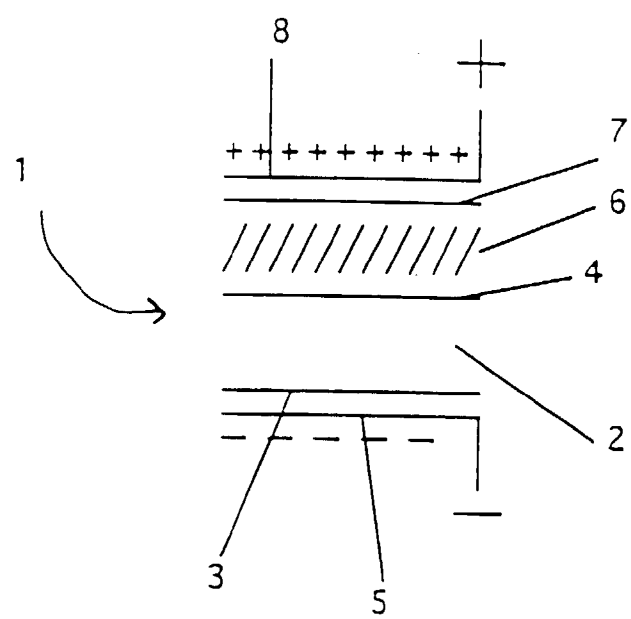


FIGURE 1

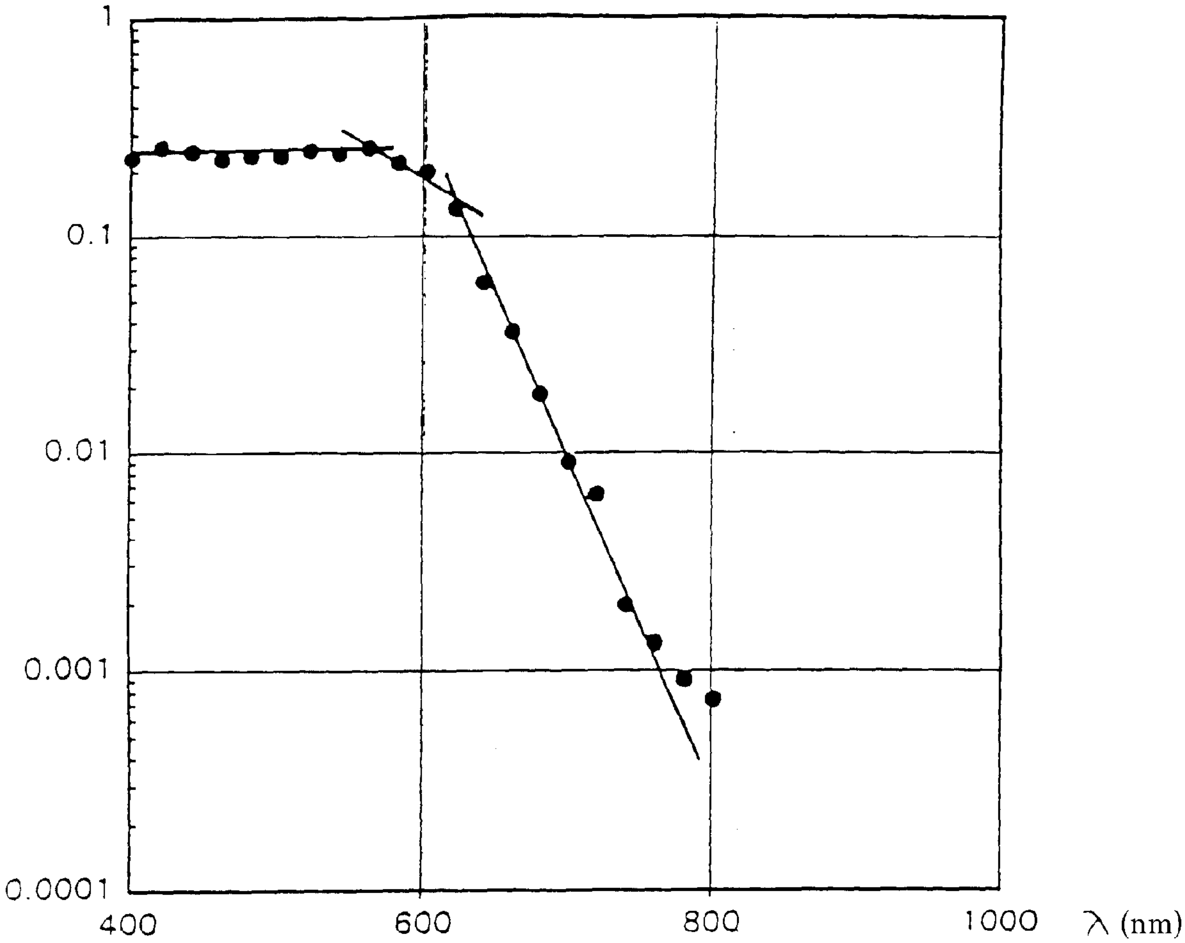


FIGURE 2

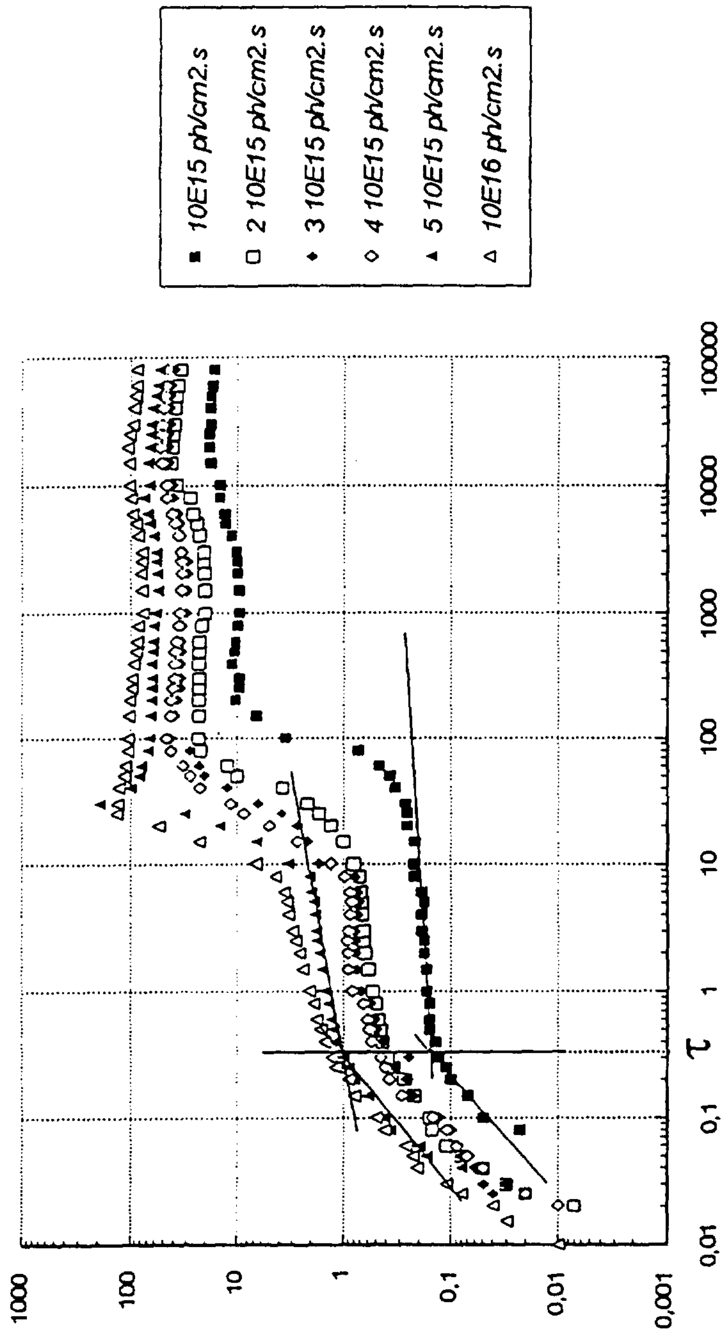
10E15 ph/cm2.s
2 10E15 ph/cm2.s
3 10E15 ph/cm2.s
4 10E15 ph/cm2.s
5 10E15 ph/cm2.s
10E16 ph/cm2.s
1000
100
10
1
0,1
0,01
0,001
0,01
0,1
1
10
100
1000
10000
100000
τ

FIGURE 3